(19) Europäisches Patentamt
European Patent Office
Office européen des brevets

(11) **EP 2 119 488 B1**

(12) **FASCICULE DE BREVET EUROPEEN**

(45) Date de publication et mention
de la délivrance du brevet:
**29.03.2017  Bulletin 2017/13**

(51) Int Cl.:
***B01D 43/00*** *(2006.01)*

(21) Numéro de dépôt: **09290347.5**

(22) Date de dépôt: **12.05.2009**

(54) **PROCÉDÉ ET DISPOSITIF D'EXTRACTION D'UNE PHASE LIQUIDE D'UNE SUSPENSION**

VERFAHREN UND VORRICHTUNG ZUR EXTRAKTION EINER FLÜSSIGEN PHASE AUS EINER SUSPENSION

METHOD AND DEVICE FOR EXTRACTING A LIQUID PHASE FROM A SUSPENSION

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **13.05.2008  FR 0802576**

(43) Date de publication de la demande:
**18.11.2009  Bulletin 2009/47**

(73) Titulaires:
• **Commissariat à l'Énergie Atomique
et aux Énergies Alternatives
75015 Paris (FR)**
• **Centre National de la Recherche Scientifique
75016 Paris (FR)**

(72) Inventeurs:
• **Achard, Jean Luc
38100 Grenoble (FR)**
• **Sollier, Elodie
38000 Grenoble (FR)**
• **Rostaing, Hervé
38420 Le Versoud (FR)**

(74) Mandataire: **Gevers & Orès
41 avenue de Friedland
75008 Paris (FR)**

(56) Documents cités:
**WO-A1-2006/056219**

• **DR. SHINICHI OOKAWARA: "Particles Make the Cut in Microseparators" FLUENT NEWS (FALL 2003), [Online] XP002508914 Extrait de l'Internet: URL:http://www.fluent.com/about/news/newsletters/03v12i2_fall/pdfs/jp6.pdf>**
• **PARK J ET AL: "Continuous Plasma Separation Form Whole Blood Using Microchannel Geometry" 12 mai 2005 (2005-05-12), MICROTECHNOLOGY IN MEDICINE AND BIOLOGY, 2005. 3RD IEEE/EMBS SPECIAL TOPIC CONFERENCE ON HONOLULU, HI, USA 12-15 MAY 2005, PISCATAWAY, NJ, USA,IEEE, PAGE(S) 8 - 9 , XP010886919 ISBN: 978-0-7803-8711-9 * page 8, colonne de gauche, ligne 1 - page 9, colonne de droite, ligne 25; figure 2 ***
• **BLATTERT C: "Separation of blood cells and plasma in microchannel bend structures" 1 octobre 2004 (2004-10-01), PROCEEDINGS OF THE SPIE, SPIE, PAGE(S) 143 - 151 , XP002337275 * page 145, ligne 16 - page 150, ligne 12; figure 2 ***

EP 2 119 488 B1

## Description

L'invention porte sur un procédé et sur un dispositif d'extraction d'une phase liquide d'une suspension. L'invention s'applique en particulier à la séparation du plasma sanguin.

Le fractionnement sanguin cellules/plasma se fait traditionnellement par centrifugation, dans des systèmes de dimensions macroscopiques. Plus récemment des techniques microfluidiques ont également été développées.

Dans le domaine des microsystèmes, la technique la plus utilisée est la filtration. Des filtres sont placés perpendiculairement à l'écoulement, avec des pores aux dimensions optimisées pour retenir les particules, et récupèrent ainsi une fraction de la phase liquide. La limitation principale de cette technique, dans le cas d'une solution biologique, réside dans la grande déformabilité de certaines cellules (en particulier les globules rouges dans le cas du sang). Les pores se colmatent rapidement, surtout dans le cas d'une solution très concentrée, et les cellules finissent par lyser.

Une autre technique consiste à réaliser une séparation par centrifugation à l'échelle microfluidique, par injection de la suspension dans une conduite en spirale ou en coude. Par exemple, l'article de C. Blattert, R. Jurischka, I. Tahhan, A. Schoth, P. Kerth, W. Menz, « Microfluidic blood plasma separation unit based on microchannel bend structures », IEEE EMBS, Hawaii 12-15 May (2005), 38-41 décrit un dispositif combinant la centrifugation apparaissant dans un canal coudé au phénomène d' « écumage » du plasma (« plasma skimming » en anglais), dû à la présence d'un canal fin au niveau du coude. L'écumage correspond à l'extraction de la phase liquide du sang au niveau d'un embranchement, extraction résultant de la différence importante de débits entre le canal principal et le canal fin. Ce dispositif permet d'extraire 5 à 10% du plasma. Un perfectionnement du dispositif, permettant d'atteindre un rendement de 15% pour un hématocrite de 9%, est décrit dans l'article de C. Blattert, R. Jurischka, I. Tahhan, A. Schoth, H. Reinecke, « Improved plasma yield by a new design of microchannel bend structures » μTAS, Tokyo 5-9 November (2009), 359-361 et dans le document US 2006/020400.

L'efficacité des techniques de centrifugation dans des microsystèmes est cependant limitée par les écoulements secondaires (cellules de Dean) qui se développent dans ces conditions et tendent à mélanger les particules que l'on souhaite séparer de la fraction liquide. Voir à ce propos l'article de S. Ookawara, D. Street et K. Ogawa, « Numerical study on development of particle concentration profiles in a curved microchannel », Chem. Engineering Science 61 (2006), 3714-3724, ainsi que celui de A.P. Sudarsan, V.M. Ugaz, Multivortex micromixing. PNAS (2006), 103, 19, 7228-7233.

Dans l'article de S. Ookawara, R. Higashi, D. Street, K. Ogawa, « Feasiblity study on concentration of slurry and classification of contained particles by microchannel » Chem. Eng. Journal (2004), 101: 171-178, il est proposé d'exploiter l'équilibre entre la force centrifuge et l'effet de mélange induit par les écoulements secondaires pour trier les particules d'une suspension.

Une des techniques émergentes est l'extraction en zone appauvrie. Cette technique est fondée sur le fait que des particules en suspension injectées dans une conduite droite subissent une migration latérale hétérogène due aux forces de cisaillement; il apparaît donc une zone sans particules au bord du canal, puis un anneau surconcentré entourant la zone centrale où la concentration est homogène. L'application de cette technique à l'extraction du plasma sanguin est décrite dans l'article de M. Faivre, M. Abkarian, K Bickraj et H Stone « Geometrical focusing of cells in a microfluidic device: an approach to separate blood plasma », Biorheology (2006) 43: 147-159. Pour un échantillon dilué à un hématocrite de 16%, injecté à 200μl/h, 24% de plasma est extrait.

L'article de J. Park, K. Cho, C. Chung, D.C. Han, J.K. Chang, « Continuous plasma separation from whole blood using microchannel geometry », IEEE EMBS, Hawaii 12-15 May (2005), 8-9, décrit un dispositif microfluidique dans lequel la zone appauvrie est élargie grâce à l'exploitation de la zone à forte courbure (coin) d'un coude dans un microcanal. Ce dispositif permet de collecter 99% des cellules sur un volume de 20μl à un débit de 50 nl/min.

La principale limitation de la technique d'extraction en zone appauvrie est d'être fondée sur un phénomène instable. Une action quelconque exercée sur l'écoulement (pour extraire le plasma par exemple) entraîne une perturbation de l'écoulement. De plus, le phénomène de zone appauvrie dépend des conditions de l'écoulement (viscosité du liquide, caractéristiques rhéologiques des particules).

Un but de l'invention est de procurer une technique microfluidique de séparation d'une suspension ne présentant pas au moins certains des inconvénients de l'art antérieur.

Pour atteindre ce but, l'invention exploite un couplage entre deux effets connus par eux-mêmes : d'une part, la formation près de la paroi d'une conduite droite, d'un pic de concentration en particules, observée lors de l'injection d'une suspension dans un canal rectiligne (il s'agit de l'effet exploité par les techniques précitées d'extraction en zone appauvrie) ; et d'autre part l'apparition d'écoulements secondaires, dits cellules ou vortex de Dean, dans une conduite courbe.

Conformément à l'invention, la suspension à séparer est injectée dans un dispositif microfluidique comportant un canal rectiligne relativement long, qui permet l'établissement progressif près de la paroi d'un pic de concentration, puis un coude plus court qui, via l'établissement de deux cellules de Dean superposées, assure la séparation des phases liquide et solide.

Dans le cadre de l'invention, les vortex de Dean contribuent de manière essentielle à la séparation : il y a là une rupture conceptuelle par rapport à l'art antérieur, où l'effet de ces vortex est considéré comme défavorable. Autrement dit, la démarche traditionnelle tend à privilégier la force centrifuge au détriment de la force visqueuse d'entraînement des globules dans les vortex de Dean. L'invention relève d'une démarche différente, voire opposée, qui consiste à rendre dominante la force visqueuse au détriment de la force centrifuge. Conformément à l'invention, on favorise ainsi les conditions dans lesquelles les particules de la suspension sont de simples marqueurs de l'écoulement porteur et n'ont aucune « autonomie » vis a vis de lui.

Le procédé de l'invention a un potentiel supérieur à celui de l'approche traditionnelle basée sur l'exploitation d'une force centrifuge, notamment dans le cas où la suspension à séparer est le sang. En effet, les globules sanguins sont très petits et ont une masse volumique voisine de celle du plasma, conditions qui ne favorisent pas la séparation par centrifugation.

Un objet de l'invention est donc un procédé d'extraction d'une phase liquide d'une suspension comportant l'injection de ladite suspension dans une conduite présentant une première section droite et une seconde section courbe ; et l'extraction, à la sortie de ladite section courbe de la conduite, d'une fraction enrichie en liquide de ladite suspension, spatialement séparée d'une fraction de suspension enrichie en particules ; ledit procédé étant caractérisé en ce que le débit de la suspension, ainsi que la géométrie de la conduite, sont choisis de telle manière que : dans la section droite, des forces de portance provoquent une surconcentration de particules dans un anneau autour de l'axe longitudinal de la conduite ; et dans la section courbe, des écoulements secondaires de Dean déforment ledit anneau et provoquent une séparation spatiale entre ladite fraction enrichie en liquide et ladite fraction enrichie en particules, et en ce que

la longueur et le rayon de courbure de ladite section courbe, ainsi que le débit de la suspension, sont choisis de telle manière que les écoulements secondaires de Dean provoquent une surconcentration de particules du côté intérieur de la conduite ; et dans lequel l'extraction de ladite fraction de suspension enrichie en liquide est effectuée du côté extérieur de la conduite.

Il est intéressant d'observer que, dans les procédés conventionnels basés sur la centrifugation, la fraction de suspension enrichie en liquide est extraite du côté intérieur de la conduite, et pas du côté extérieur.

Selon différentes variantes de l'invention :

- L'extraction de ladite fraction de suspension enrichie en liquide peut être effectuée uniquement à la fin de ladite section courbe de la conduite.
- Un moyen de filtrage peut être prévu à l'entrée d'une conduite secondaire d'extraction de ladite fraction de suspension enrichie en liquide.
- En variante, une conduite secondaire d'extraction de ladite fraction de suspension enrichie en liquide peut courir parallèlement à ladite section courbe, du côté extérieur de cette dernière et séparée d'elle par une paroi filtrante empêchant le passage des particules de la suspension.
- La longueur et le rayon de courbure de ladite section courbe, ainsi que le débit de la suspension, peuvent être choisis de telle manière que les particules de la suspension ne sont entraînées par les écoulements secondaires de Dean que pour approximativement un quart de cycle.
- La longueur de ladite section droite de la conduite peut être choisie de manière à maximiser ladite surconcentration de particules dans un anneau autour de l'axe longitudinal de la conduite.
- La longueur de ladite section droite de la conduite peut être comprise entre 1 et 50 mm.
- La section droite de ladite conduite peut présenter un rétrécissement pour resserrer sur l'axe longitudinal de la conduite ledit anneau de surconcentration de particules.
- Ladite section courbe peut présenter un angle de courbure compris entre 10° et 360°, et de préférence entre 160° et 200°, et/ou un rayon de courbure compris entre 10 $\mu$m et 2 mm.
- Le nombre de Dean de l'écoulement de la suspension dans la section courbe de la conduite peut être compris entre 1 et 140, et de préférence entre 10 et 100.
- La suspension à séparer peut être du sang.

Un autre objet de l'invention est un dispositif microfluidique pour la mise en oeuvre d'un tel procédé d'extraction d'une phase liquide d'une suspension, comportant : une conduite principale de circulation de ladite suspension, comprenant une section droite et une section courbe ; et une conduite secondaire d'extraction d'une fraction enrichie en liquide de ladite suspension, disposée à la sortie de ladite section courbe de la conduite principale ; ledit dispositif étant caractérisé en ce que la géométrie de la conduite principale et l'agencement de la conduite secondaire sont choisis de telle manière que, pour un débit d'écoulement adapté de ladite suspension : dans la section droite, des forces de portance provoquent une surconcentration de particules dans un anneau autour de l'axe longitudinal de la conduite ; dans la section courbe, des écoulements secondaires de Dean déforment ledit anneau et provoquent une séparation spatiale entre ladite fraction enrichie en liquide et ladite fraction enrichie en particules ; et au moins une partie de ladite fraction enrichie en liquide de la suspension à séparer pénètre dans ladite conduite secondaire, à l'exclusion de ladite fraction enrichie en particules et en ce que la longueur et le rayon de courbure de ladite section courbe, sont choisis de telle manière que, pour un débit d'écoulement adapté de ladite suspension, les écoulements secondaires de Dean provoquent une surconcentration de particules du côté intérieur de la conduite ; et dans lequel l'extraction de ladite fraction de suspension enrichie en liquide est effectuée du côté extérieur de la conduite.

L'invention porte également sur un dispositif microfluidique constitué par la connexion en série d'au moins deux dispositifs élémentaires tels que décrits ci-dessus.

D'autres caractéristiques, détails et avantages de l'invention ressortiront à la lecture de la description faite en référence aux dessins annexés donnés à titre d'exemple et dans lesquels :

- La figure 1 illustre l'effet de surconcentration des particules d'une suspension dans un anneau autour de l'axe longitudinal d'une conduite rectiligne ;
- les figures 2A et 2B montrent comment cet effet, combiné aux écoulements secondaires de Dean, permet d'obtenir une séparation de la suspension ;
- la figure 3 représente schématiquement un dispositif selon un mode de réalisation avantageux de l'invention ; et
- les figures 4, 5, 6A - 6C et 7 représentent schématiquement des dispositifs selon des modes de réalisation alternatifs de l'invention.

Comme expliqué plus haut, l'invention exploite la combinaison de deux phénomènes : la migration latérale dans un canal rectiligne et les écoulements secondaires dans un coude afin de réaliser l'extraction de la phase liquide d'une suspension de particules et principalement l'extraction du plasma d'un échantillon de sang complet non dilué.

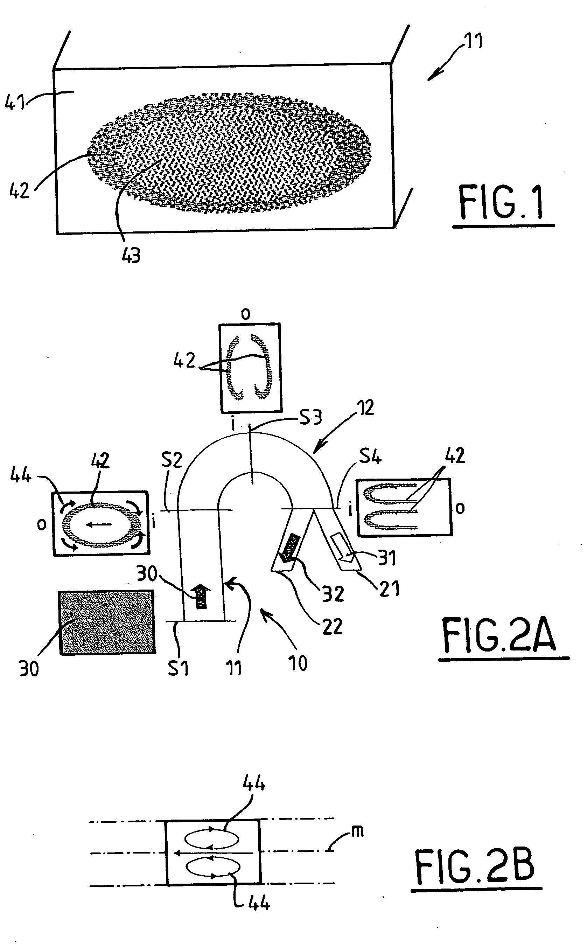

Il est connu de l'art antérieur que, lorsque du sang s'écoule dans une conduite rectiligne, les globules rouges, cellules ellipsoïdes et déformables, subissent une force de portance qui tend à les éloigner de la paroi. La figure 1 montre qu'au bout d'une certaine longueur d'écoulement, le profil de distribution des globules dans une conduite rectiligne 11 de section rectangulaire comporte : une zone 41 sans particules près des parois ; un anneau 42 centré sur l'axe longitudinal de la conduite, dans lequel s'observe une surconcentration de globules ; et une zone centrale 43 où la concentration en globule est relativement homogène et sensiblement plus faible que dans l'anneau 42.

La surconcentration de globules dans l'anneau 42, initialement nulle, croit avec la longueur d'écoulement, jusqu'à se stabiliser après une distance limite, dont la valeur dépend des caractéristiques de la suspension (notamment, de sa concentration en particules et de la déformabilité de ces dernières) et de l'écoulement. Typiquement, la distance limite est de l'ordre de 1 à 50 mm dans le cas d'une conduite de type microfluidique.

La figure 2A représente de manière schématique un dispositif pour la mise en oeuvre du procédé de l'invention. Ce dispositif comporte essentiellement une conduite 10 présentant une première section droite 11 et une seconde section courbe 12. Après avoir effectué un virage de 180° environ, la section courbe 12 de la conduite se bifurque en deux conduites secondaires: la conduite 21, du côté extérieur du virage, est destinée à l'extraction du plasma (ou, plus précisément, d'une fraction 31 de sang appauvrie en globules et enrichie en plasma), tandis que la conduite 22, du côté intérieur du virage, récolte une fraction 32 de sang enrichi en globules.

A l'entrée de la section droite 11 (coupe S1) le sang 30, injecté à l'aide d'un pousse-seringue ou d'une pompe permettant un contrôle du débit, présente une concentration en globules sensiblement uniforme, tandis qu'à l'entrée de la section courbe 12 un anneau de surconcentration a pu se former (coupe S2).

Dans la section courbe 12 de la conduite (coupes S2, S3 et S4) des écoulements secondaires de Dean peuvent se développer. Ces écoulements sont dus à l'effet combiné de la force centrifuge et des forces visqueuses. En effet, dans un canal, l'écoulement d'un liquide est de type Poiseuille, ce qui signifie que le liquide est plus rapide au centre que près des parois. La force centrifuge, proportionnelle au carré de la vitesse, est donc plus forte sur les molécules de liquide (et sur les particules, lorsque le liquide est une suspension) situées au centre du canal. Les molécules et les particules de la région centrale tendent donc à se déplacer vers le côté extérieur de la courbure, et poussent les molécules plus lentes vers l'intérieur, en haut et en bas du canal. Concrètement cela se traduit par l'apparition de deux vortex 44, dits vortex de Dean, tournant dans des directions opposées et séparés par un plan médian m du canal. Comme le montre la figure 2B, les écoulements secondaires sont perpendiculaires à la direction axiale de l'écoulement principal dans la conduite.

Les écoulements de Dean déforment l'anneau de surconcentration de particules 42 : la figure 2A montre comment cette évolution se produit entre le début de la section courbe (coupe S1), son milieu (coupe S2) et sa partie terminale (coupe S3). Lorsque les conditions de l'écoulement sont choisies de manière opportune, à la fin de la conduite courbe 12, pratiquement tous les globules qui constituaient initialement l'anneau de surconcentration 42 se trouvent rassemblées du côté intérieur i de la courbure, et peuvent être collectés par la conduite secondaire 22, tandis que la fraction du sang qui se trouve du côté extérieur o de ladite courbure, enrichie en plasma, est extraite via la conduite secondaire 21.

Cela présuppose un contrôle fin des écoulements secondaires dans la conduite 10. En effet, si les vortex de Dean ne sont pas assez développés, la séparation ne se produit pas, tandis que des vortex trop développés tendent à mélanger à nouveau les fractions enrichies en plasma et en globules, après les avoir séparées. Plus précisément, il est préférable que les particules de la suspension ne soient entraînées par les écoulements secondaires de Dean que pour un seul cycle. En pratique, ce contrôle s'effectue par une régulation du débit, la géométrie du dispositif restant fixe.

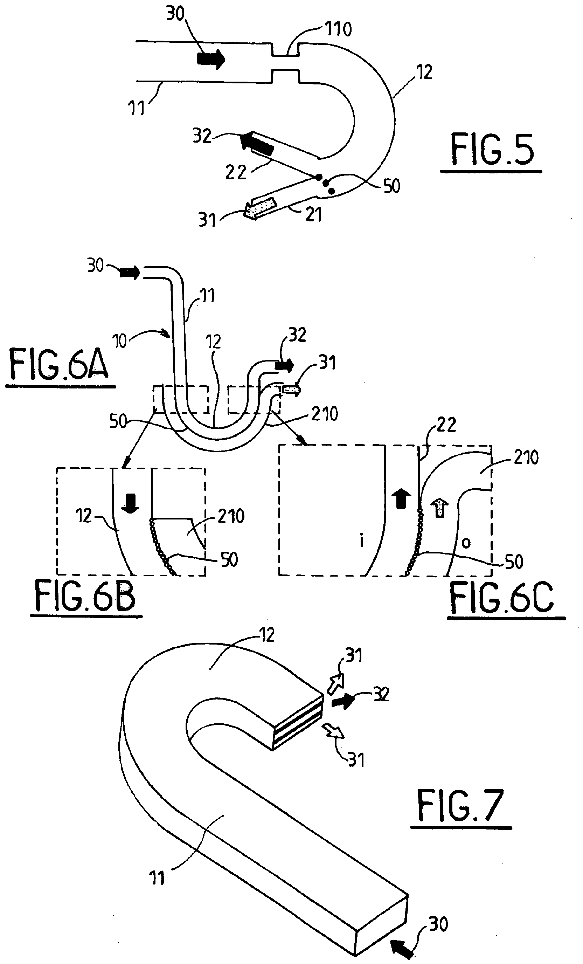

On comprend que si le débit du sang est légèrement plus élevé que dans l'exemple de la figure 2A, la déformation supplémentaire subie par l'anneau de surconcentration 42 tend à rassembler les globules à proximité du plan médian m de la conduite. Dans ces conditions, une séparation « en hauteur » des différentes fractions du sang est possible, comme cela est représenté sur la figure 7. Cependant, ce mode de réalisation, qui ne fait pas partie de l'invention, est plus délicat à mettre en oeuvre, car il nécessite la fabrication d'un dispositif comportant trois conduites secondaires superposées, ce qui pose des difficultés technologiques.

Le paramètre qui caractérise les écoulements secondaires dans la section courbe 12 de la conduite est le nombre (adimensionnel) de Dean, κ donné par :

$$\kappa = \frac{Q}{D_h^{1/2} R^{1/2} \nu}$$

où :

- Q est le débit d'injection de la suspension ;
- R est le rayon de courbure moyen de la section 12 ;
- ν est la viscosité cinématique de la suspension ; et
- $D_h$ est le diamètre hydraulique de la section, donné à son tour par $D_h = \frac{4A}{U}$ , A étant l'aire de la section et U son périmètre.

Une et une seule paire de vortex de Dean apparaît pour κ compris entre 1 et 140 ; pour la mise en oeuvre de l'invention, cependant, on préfère 10≤κ≤100.

Le débit Q est généralement compris entre 1 μl/min et 10 ml/min. En effet, une valeur trop faible ne permettrait pas d'atteindre un nombre de Dean suffisant, tandis que la limite haute du débit dépend de contraintes technologiques, liées essentiellement à la connectique. Dans le cas de microsystèmes en silicium, il paraît délicat de dépasser des débits de 800 μl/min. Pour des débits plus élevés, il semble nécessaire d'avoir recours à des dispositifs de dimensions plus grandes, réalisés par usinage d'une matière plastique.

Le rayon de courbure R est typiquement compris entre 10 μm et 2 mm. La limite inférieure est donnée par les contraintes technologiques liées à la fabrication du dispositif de séparation.

Le diamètre hydraulique $D_h$ est généralement compris entre quelques dizaines de micromètres et 1 cm. La limite inférieure est déterminée par des contraintes technologiques de fabrication, mais aussi par la nécessité de permettre l'écoulement des particules de la suspension.

La viscosité cinématique dépend de la nature de la suspension à séparer. Celle du sang est généralement comprise entre $4\cdot10^{-6}$ et $25\cdot10^{-6}$ m²/s selon les patients.

L'angle θ de la courbure doit être supérieur à 10° pour permettre l'établissement des vortex de Dean. Un angle de plus de 360° (conduite en spirale) n'est pas souhaité pour la mise en oeuvre de l'invention, pour éviter que des écoulements secondaires trop développés ne mélangent la suspension au lieu de la séparer. En particulier, il est avantageux de choisir θ compris entre 160° et 200°, et plus particulièrement θ=180°.

En général, on détermine à priori les propriétés géométriques du dispositif de séparation. Puis, à l'aide d'essais et/ou de simulations, on détermine le débit Q qui permet d'obtenir la séparation optimale.

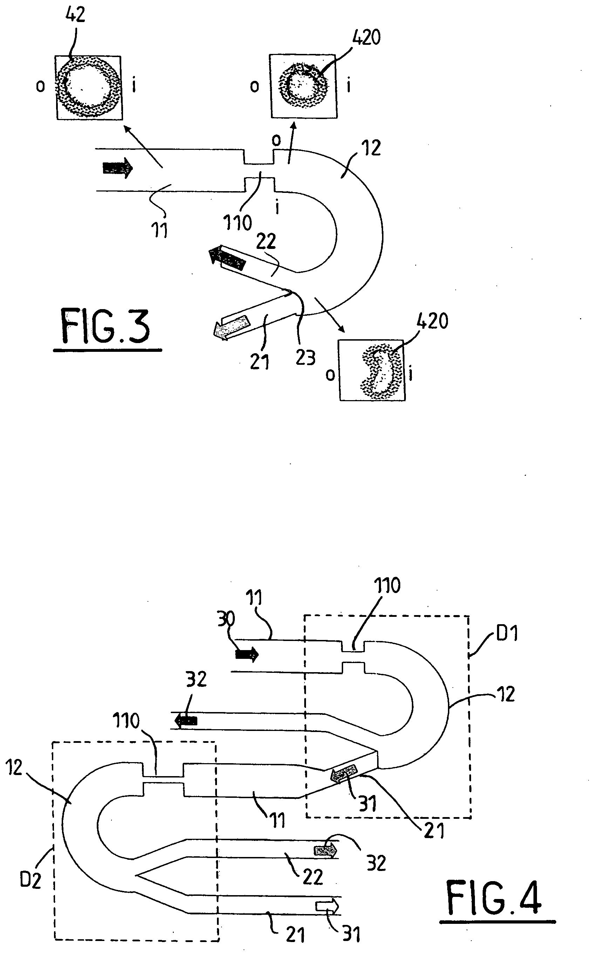

Dans la figure 2, dans un souci de simplicité, seuls les globules sanguins situés dans l'anneau de surconcentration 42 ont été représentés. En réalité, comme le montre la figure 1, une partie non négligeable des globules se trouve dans la région centrale 43 du canal. Ces globules ne sont pas séparés par les vortex de Dean qui, au contraire, tendent à les repartir sur l'ensemble de la section de la conduite. La séparation n'est donc pas complète. Pour améliorer la séparation, il est possible d'exploiter le fait qu'une restriction géométrique 110 dans la section droite 11 de la conduite est susceptible d'accentuer la concentration des globules dans l'anneau 42 (voir l'article précité de M. Faivre et al.). Cela est représenté sur la figure 3, où la référence 420 dénote l'anneau de surconcentration en aval de la restriction 110.

Idéalement, la restriction 110 devrait être la plus longue et fine possible. En pratique, cependant, des restrictions de largeur inférieure à 20 μm peuvent lyser les globules sanguins. Il est généralement préférable, en tout cas, que la largeur de la restriction soit inférieure à celle de la conduite en amont d'au moins un facteur 2. En ce qui concerne la longueur de la restriction, elle doit de préférence être supérieure à 50 μm, valeur au-dessous de laquelle l'effet de concentration est faible.

La forme de la section de la conduite 10 est généralement indifférente : elle peut par exemple être carrée, rectangulaire, ou même circulaire (bien que, dans ce cas, le mode fabrication soit plus délicat à mettre en oeuvre), carrée ou rectangulaire. Lorsque la conduite a une forme rectangulaire, cependant, il faut que le rapport d'aspect hauteur/largeur (la largeur étant définie comme la dimension dans le plan de la courbure) ne dépasse pas quelques unités. Autrement, de paires multiples de vortex de Dean apparaitraient dans la section courbe de la conduite, ce qui n'est pas souhaitable, parce que les vortex sont alors plus complexes à maitriser et donc à exploiter.

Les conduites secondaires d'extraction 21 et 22 ne présentent pas nécessairement la même largeur : le rapport de leurs sections est choisi de manière à atteindre à la fois un niveau de pureté du plasma suffisant et un rendement d'extraction acceptable. D'une manière générale, la conduite secondaire d'extraction du plasma sera plus étroite que celle d'extraction des globules, d'un facteur compris entre 2 et 10. Il faut veiller à ce que la conduite d'extraction des globules ne soit pas trop fine, pour éviter son colmatage rapide.

Bien que cela ne soit pas clairement visible sur la figure 3, l'embranchement 23 entre les conduites secondaires 21, 22 ne devrait pas présenter une arête vive, pour éviter de lyser les globules incidents. Un embranchement arrondi, avec un rayon de courbure d'au moins 30 μm est préconisé.

Pour améliorer la pureté du plasma extrait, plusieurs dispositifs élémentaires D1, D2 peuvent être reliés en série, comme représenté sur la figure 4. Par exemple, le premier dispositif élémentaire D1 peut réaliser une séparation grossière, mais à haut rendement, et le deuxième dispositif élémentaire D2 purifier ultérieurement le plasma ainsi extrait.

Une autre possibilité pour améliorer la pureté du plasma extrait est de disposer un motif filtrant 50 à l'entrée de la conduite secondaire d'extraction 21, comme représenté sur la figure 5. La séparation partielle obtenue par les vortex de Dean évite le colmatage rapide du filtre qui se produit dans les dispositifs filtrants connus de l'art antérieur.

Le motif filtrant peut notamment être constitué par une ou plusieurs rangées de piliers, écartés d'environ 1,50 μm (plus généralement, une distance entre piliers comprise entre 1 et 3 μm peut être adaptée).

Les figures 6A, 6B et 6C représentent un autre dispositif exploitant conjointement l'effet de séparation par les vortex de Dean et le filtrage. Dans ce dispositif, une conduite secondaire d'extraction du plasma 210 court parallèlement à la section courbe 12 de la conduite principale 10, du côté extérieur de cette dernière et séparée d'elle par une paroi filtrante 51 (une rangée de piliers). Alors que les globules sanguins, entraînés par les écoulements secondaires, se concentrent du côté interne de la courbure, le plasma peut s'écouler librement à travers la paroi filtrante vers la conduite d'extraction 210. Dans un tel dispositif, donc, la séparation se fait sur toute la longueur de la section courbe 12.

Un dispositif selon l'invention peut être réalisé à l'aide de techniques de photogravure empruntées à la microélectronique. Ces procédés sont connus, maîtrisés et garantissent une grande précision de la gravure. Les étapes de fabrication peuvent être les suivantes. D'abord, un substrat, par exemple en silicium, est recouvert d'un dépôt d'oxyde de silicium puis d'une couche de résine photosensible. Cette résine est insolée à travers un masque comprenant les motifs voulus. L'oxyde de silicium est gravé à travers la couche de résine restante. Puis cette résine est enlevée. Une nouvelle couche d'oxyde thermique est déposée sur l'ensemble du substrat, qui est ensuite capoté par scellement anodique.

Une mise en oeuvre du dispositif est également possible en polymère. Un moule est au préalable fabriqué avec des motifs en résine photosensible sur un support de silicium ou de verre. Le polymère est déposé sur le support puis réticulé, démoulé et capoté.

On peut également envisager une macro-fabrication par usinage d'un support plastique (en polycarbonate par exemple).

Dans l'ensemble de ces modes de fabrication, les connectiques sont réalisées avec des capillaires adaptés et biocompatibles (polyethyletherketone, silice, silicone, polytétrafluoroéthylène).

**Revendications**

1. Procédé d'extraction d'une phase liquide d'une suspension comportant :

   - l'injection de ladite suspension (30) dans une conduite (10) présentant une première section droite (11) et une seconde section courbe (12) ; et
   - l'extraction, à la sortie de ladite section courbe de la conduite, d'une fraction enrichie en liquide (31) de ladite suspension, spatialement séparée d'une fraction de suspension enrichie en particules (32) ;
   **caractérisé en ce que** le débit d'injection de la suspension, ainsi que la géométrie de la conduite, sont choisis de telle manière que :

   - dans la section droite, des forces de portance provoquent une surconcentration de particules dans un anneau (42) autour de l'axe longitudinal de la conduite ;
   - dans la section courbe, des écoulements secondaires de Dean (44) déforment ledit anneau et provoquent une séparation spatiale entre ladite fraction enrichie en liquide et ladite fraction enrichie en particules ;
   et **en ce que** :

   - la longueur et le rayon de courbure de ladite section courbe, ainsi que le débit de la suspension, sont choisis de telle manière que les écoulements secondaires de Dean provoquent une surconcentration de particules du côté intérieur (i) de la conduite ; et dans lequel l'extraction de ladite fraction de suspension enrichie en liquide est effectuée du côté extérieur (o) de la conduite.

2. Procédé selon la revendication 1, dans lequel l'extraction de ladite fraction de suspension enrichie en liquide est effectuée uniquement à la fin de ladite section courbe (12) de la conduite.

3. Procédé selon l'une des revendications précédentes, dans lequel un moyen de filtrage (50) est prévu à l'entrée d'une conduite secondaire d'extraction (21) de ladite fraction de suspension enrichie en liquide.

4. Procédé selon la revendication 1, dans lequel une conduite secondaire d'extraction (210) de ladite fraction de suspension enrichie en liquide court parallèlement à ladite section courbe, du côté extérieur de cette dernière et séparée d'elle par une paroi filtrante (51) empêchant le passage des particules de la suspension.

5. Procédé selon l'une des revendications précédentes, dans lequel la longueur et le rayon de courbure de ladite section courbe, ainsi que le débit de la suspension, sont choisis de telle manière que les particules de la suspension ne sont entraînées par les écoulements secondaires de Dean que pour approximativement un quart de cycle.

6. Procédé selon l'une des revendications précédentes, dans lequel la longueur de ladite section droite (11) de la conduite est choisie de manière à maximiser ladite surconcentration de particules dans un anneau (42, 420) autour de l'axe longitudinal de la conduite.

7. Procédé selon l'une des revendications précédentes, dans lequel la longueur de ladite section droite (11) de la conduite est comprise entre 1 et 50 mm.

8. Procédé selon l'une des revendications précédentes, dans lequel la section droite (11) de ladite conduite présente un rétrécissement (111) pour resserrer sur l'axe longitudinal de la conduite ledit anneau (420) de surconcentration de particules.

9. Procédé selon l'une des revendications précédentes, dans lequel ladite section courbe (12) présente un angle de courbure compris entre 10° et 360°, et de préférence entre 160° et 200°.

10. Procédé selon l'une des revendications précédentes, dans lequel ladite section courbe (12) présente un rayon de courbure compris entre 10 $\mu$m et 2 mm.

11. Procédé selon l'une des revendications précédentes, dans lequel le nombre de Dean de l'écoulement de la suspension dans la section courbe de la conduite est compris entre 1 et 140, et de préférence entre 10 et 100.

12. Procédé selon l'une des revendications précédentes dans lequel la suspension est du sang.

13. Dispositif microfluidique pour la mise en oeuvre d'un procédé d'extraction d'une phase liquide d'une suspension selon l'une des revendications précédentes, comportant :

- une conduite principale de circulation (10) de ladite suspension, comprenant une section droite (11) et une section courbe (12) ; et
- une conduite secondaire d'extraction (21) d'une fraction enrichie en liquide de ladite suspension, disposée à la sortie de ladite section courbe de la conduite principale **caractérisé en ce que** la géométrie de la conduite principale et l'agencement de la conduite secondaire sont choisis de telle manière que, pour un débit d'écoulement adapté de ladite suspension :

- dans la section droite, des forces de portance provoquent une surconcentration de particules dans un anneau (42) autour de l'axe longitudinal de la conduite ;
- dans la section courbe, des écoulements secondaires de Dean (44) déforment ledit anneau et provoquent une séparation spatiale entre ladite fraction enrichie en liquide et ladite fraction enrichie en particules ; et
- au moins une partie de ladite fraction enrichie en liquide (31) de la suspension à séparer pénètre dans ladite conduite secondaire (21), à l'exclusion de ladite fraction enrichie en particules ;

et **en ce que** :

- la longueur et le rayon de courbure de ladite section courbe, sont choisis de telle manière que, pour un débit d'écoulement adapté de ladite suspension, les écoulements secondaires de Dean provoquent une surconcentration de particules du côté intérieur (i) de la conduite ; et dans lequel l'extraction de ladite fraction de suspension enrichie en liquide est effectuée du côté extérieur (o) de la conduite.

14. Dispositif microfluidique constitué par la connexion en série d'au moins deux dispositifs élémentaires (D1, D2) selon la revendication 13.

**Patentansprüche**

1. Verfahren zur Extraktion einer flüssigen Phase aus einer Suspension, wobei das Verfahren Folgendes umfasst:

- Einspritzung der Suspension (30) in eine Leitung (10), die einen ersten geraden Abschnitt (11) und einen zweiten gebogenen Abschnitt (12) aufweist; und
- Extraktion einer mit Flüssigkeit angereicherten Fraktion (31) der Suspension am Austritt des gebogenen Abschnitts der Leitung, wobei diese Fraktion räumlich von einer mit Teilchen angereicherten Suspensionsfraktion (32) getrennt ist;

**dadurch gekennzeichnet, dass** der Einspritzdurchsatz der Suspension sowie die Geometrie der Leitung derart gewählt sind, dass:

- in dem geraden Abschnitt Auftriebskräfte eine Überkonzentration von Teilchen in einem Ring (42) um die Längsachse der Leitung herum bewirken;
- in dem gebogenen Abschnitt sekundäre Dean-Strömungen (44) den Ring verformen und eine räumliche Trennung zwischen der mit Flüssigkeit angereicherten Fraktion und der mit Teilchen angereicherten Fraktion bewirken;
und dass:

- die Länge und der Biegeradius des gebogenen Abschnitts sowie der Durchsatz der Suspension derart gewählt sind, dass die sekundären Dean-Strömungen eine Überkonzentration von Teilchen auf der Innenseite (i) der Leitung bewirken; und wobei die Extraktion der mit Flüssigkeit angereicherten Suspensionsfraktion an der Außenseite (o) der Leitung durchgeführt wird.

2. Verfahren nach Anspruch 1, wobei die Extraktion der mit Flüssigkeit angereicherten Suspensionsfraktion einzig am Ende des gebogenen Abschnitts (12) der Leitung durchgeführt wird.

3. Verfahren nach einem der vorhergehenden Ansprüche, wobei ein Filtriermittel (50) am Eintritt einer sekundären Leitung (21) zur Extraktion der mit Flüssigkeit angereicherten Suspensionsfraktion vorgesehen ist.

4. Verfahren nach Anspruch 1, wobei eine sekundäre Leitung (210) zur Extraktion der mit Flüssigkeit angereicherten Suspensionsfraktion parallel zu dem gebogenen Abschnitt auf der Außenseite dieses letzteren verläuft und von diesem durch eine Filtrierwand (51) getrennt ist, die den Durchtritt von Teilchen der Suspension verhindert.

5. Verfahren nach einem der vorhergehenden Ansprüche, wobei die Länge und der Biegeradius des gebogenen Abschnitts sowie der Durchsatz der Suspension derart gewählt sind, dass die Teilchen der Suspension von den sekundären Dean-Strömungen nur für ungefähr ein Viertel eines Zyklus mitgerissen werden.

6. Verfahren nach einem der vorhergehenden Ansprüche, wobei die Länge des geraden Abschnitts (11) der Leitung derart gewählt ist, dass die Überkonzentration von Teilchen in einem Ring (42, 420) um die Längsachse der Leitung herum maximiert wird.

7. Verfahren nach einem der vorhergehenden Ansprüche, wobei die Länge des geraden Abschnitts (11) der Leitung zwischen 1 und 50 mm liegt.

8. Verfahren nach einem der vorhergehenden Ansprüche, wobei der gerade Abschnitt (11) der Leitung eine Verengung (111) zum Verengen des Rings (420) mit der Überkonzentration von Teilchen an der Längsachse der Leitung aufweist.

9. Verfahren nach einem der vorhergehenden Ansprüche, wobei der gebogene Abschnitt (12) einen Biegewinkel aufweist, der zwischen 10° und 360°, vorzugsweise zwischen 160° und 200° liegt.

10. Verfahren nach einem der vorhergehenden Ansprüche, wobei der gebogene Abschnitt (12) einen Biegeradius aufweist, der zwischen 10 $\mu$m und 2 mm liegt.

11. Verfahren nach einem der vorhergehenden Ansprüche, wobei die Dean-Zahl der Strömung der Suspension in dem gebogenen Abschnitt der Leitung zwischen 1 und 140 und vorzugsweise zwischen 10 und 100 liegt.

12. Verfahren nach einem der vorhergehenden Ansprüche, wobei die Suspension Blut ist.

13. Mikrofluidikvorrichtung zur Durchführung eines Verfahrens zur Extraktion einer flüssigen Phase aus einer Suspension nach einem der vorhergehenden Ansprüche, wobei die Vorrichtung Folgendes umfasst:

- eine Hauptleitung (10) zur Zirkulation der Suspension, die einen geraden Abschnitt (11) und einen gebogenen Abschnitt (12) umfasst; und
- eine sekundäre Leitung (21) zur Extraktion einer mit Flüssigkeit angereicherten Fraktion der Suspension, die am Austritt des gebogenen Abschnitts der Hauptleitung angeordnet ist **dadurch gekennzeichnet, dass** die Geometrie der Hauptleitung und die Konfiguration der sekundären Leitung derart gewählt sind, dass für einen angemessenen Strömungsdurchsatz der Suspension:

- in dem geraden Abschnitt Auftriebskräfte eine Überkonzentration von Teilchen in einem Ring (42) um die Längsachse der Leitung herum bewirken;

- in dem gebogenen Abschnitt sekundäre Dean-Strömungen (44) den Ring verformen und eine räumliche Trennung zwischen der mit Flüssigkeit angereicherten Fraktion und der mit Teilchen angereicherten Fraktion bewirken; und

- mindestens ein Teil der mit Flüssigkeit angereicherten Fraktion (31) der zu trennenden Suspension in die sekundäre Leitung (21) eindringt, unter Ausschluss der mit Teilchen angereicherten Fraktion;
und dass:

- die Länge und der Biegeradius des gebogenen Abschnitts für einen angemessenen Strömungsdurchsatz der Suspension derart gewählt sind, dass die sekundären Dean-Strömungen eine Überkonzentration von Teilchen auf der Innenseite (i) der Leitung bewirken; und wobei die Extraktion der mit Flüssigkeit angereicherten Suspensionsfraktion an der Außenseite (o) der Leitung durchgeführt wird.

14. Mikrofluidikvorrichtung, die durch Verbindung von mindestens zwei grundlegenden Vorrichtungen (D1, D2) nach Anspruch 13 in Reihe gebildet wird.

**Claims**

1. A method of extracting a liquid phase from a suspension, the method comprising:

- injecting said suspension (30) into a duct (10) presenting a first section (11) that is straight and a second section (12) that is curved; and
- at the outlet from said curved section of the duct, extracting a liquid-enriched fraction (31) of said suspension that is spatially separated from a particle-enriched fraction (32) of the suspension;
**characterized in that** the injection flow rate of the suspension and the geometry of the duct are selected in such a manner that:

- in the straight section, lift forces cause particles to be superconcentrated in a ring (42) around the longitudinal axis of the duct; and
- in the curved section, Dean secondary flows (44) deform said ring and give rise to spatial separation between said liquid-enriched fraction and said particle-enriched fraction,

and **in that** the length and the radius of curvature of said curved section, and the flow rate of the suspension, are selected in such a manner that the Dean secondary flows give rise to a superconcentration of particles on the inside (i) of the duct; and wherein said liquid-enriched suspension fraction is extracted from the outside (o) of the duct.

2. A method according to any preceding claim, wherein said liquid-enriched suspension fraction is extracted solely at the end of said curved section (12) of the duct.

3. A method according to any preceding claim, wherein filter means (50) are provided at the inlet of a secondary duct (21) for extracting said liquid-enriched suspension fraction.

4. A method according to claim 1, wherein a secondary duct (210) for extracting said liquid-enriched suspension fraction runs parallel with said curved section on the outside of the curve and separated therefrom by a filter wall (51) preventing passage of particles of the suspension.

5. A method according to any preceding claim, wherein the length and the radius of curvature of said curved section, and the flow rate of the suspension, are selected in such a manner that the particles of the suspension are entrained by the Dean secondary flows for approximately one-fourth of a cycle only.

6. A method according to any preceding claim, wherein the length of said straight section (11) of the duct is selected so as to maximize said superconcentration of particles in a ring (42, 420) around the longitudinal axis of the duct.

7. A method according to any preceding claim, wherein the length of said straight section (11) of the duct lies in the range 1 to 50 mm.

8. A method according to any preceding claim, wherein the straight section (11) of said duct presents a constriction (110) for concentrating said superconcentration ring (420) of particles on the longitudinal axis of the duct.

9. A method according to any preceding claim, wherein said curved section (12) presents a bend angle lying in the range 10° to 360°, and preferably in the range 160° to 200°.

10. A method according to any preceding claim, wherein said curved section (12) presents a radius of curvature lying in the range 10 $\mu$m to 2 mm.

11. A method according to any preceding claim, wherein the Dean number of the flow of the suspension in the curved section of the duct lies in the range 1 to 140, and preferably in the range 10 to 100.

12. A method according to any preceding claim, wherein the suspension is blood.

13. A microfluidic device for implementing a method according to any preceding claim for extracting a liquid phase from a suspension, the device comprising:

· a main duct (10) for conveying a flow of said suspension, the duct presenting a straight section (11) and a curved section (12); and
· a secondary duct (21) for extracting a liquid-enriched fraction of said suspension, the secondary duct being located at the outlet from said curved section of the main duct;
**characterized in that** the geometry of the main duct and the arrangement of the secondary duct are selected in such a manner that for an appropriate flow rate of said suspension:

· in the straight section, lift forces give rise to a superconcentration of particles in a ring (42) around the longitudinal axis of the duct;
· in the curved section, Dean secondary flows (44) deform said ring and give rise to spatial separation between said liquid-enriched fraction and said particle-enriched fraction; and
· at least a portion of said liquid-enriched fraction (31) of the suspension for separation penetrates into said secondary duct (21) to the exclusion of said particle-enriched fraction;

and **in that** the length and the radius of curvature of said curved section, are selected in such a manner that, for an adapted flow rate of the suspension, the Dean secondary flows give rise to a superconcentration of particles on the inside (i) of the duct, and wherein said liquid-enriched suspension fraction is extracted from the outside (0) of the duct.

14. A microfluidic device constituted by connecting at least two individual devices (D1, D2) according to claim 13 in series.

FIG.1

FIG.2A

FIG.2B

FIG.3

FIG.4

FIG.5

FIG.6A

FIG.6B

FIG.6C

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006020400 A

**Littérature non-brevet citée dans la description**

- **C. BLATTERT ; R. JURISCHKA ; I. TAHHAN ; A. SCHOTH ; P. KERTH ; W. MENZ.** Microfluidic blood plasma separation unit based on microchannel bend structures. *IEEE EMBS,* 12 Mai 2005, 38-41
- **C. BLATTERT ; R. JURISCHKA ; I. TAHHAN ; A. SCHOTH ; H. REINECKE.** Improved plasma yield by a new design of microchannel bend structures. *TAS,* 05 Novembre 2009, 359-361
- **S. OOKAWARA ; D. STREET ; K. OGAWA.** Numerical study on development of particle concentration profiles in a curved microchannel. *Chem. Engineering Science,* 2006, vol. 61, 3714-3724
- **A.P. SUDARSAN ; V.M. UGAZ.** Multivortex micromixing. *PNAS,* 2006, vol. 103 (19), 7228-7233
- **S. OOKAWARA ; R. HIGASHI ; D. STREET ; K. OGAWA.** Feasiblity study on concentration of slurry and classification of contained particles by microchannel. *Chem. Eng. Journal,* 2004, vol. 101, 171-178
- **M. FAIVRE ; M. ABKARIAN ; K BICKRAJ ; H STONE.** Geometrical focusing of cells in a microfluidic device: an approach to separate blood plasma. *Biorheology,* 2006, vol. 43, 147-159
- **J. PARK ; K. CHO ; C. CHUNG ; D.C. HAN ; J.K. CHANG.** Continuous plasma separation from whole blood using microchannel geometry. *IEEE EMBS,* 12 Mai 2005, 8-9